# EUROPEAN PATENT SPECIFICATION

(11) **EP 0 695 505 B1**
(45) Date of publication and mention of the grant of the patent: **15.09.1999**
(21) Application number: 95670006.6
(22) Date of filing: 28.06.1995
(51) Int. Cl.: A21C 11/00

(54) **Machine for the manufacture of puff paste boxes**
Vorrichtung zum Herstellen von Behältern aus Blätterteig
Dispositif pour la fabrication de conteneurs en pâte feuilletée

(30) Priority: 30.06.1994 PT 10153694
(43) Date of publication of application: 07.02.1996
(73) Proprietor: Da Rocha Barros, José Alves, Amoreira, Estoril (PT)
(72) Inventor: Da Rocha Barros, José Alves, Amoreira, Estoril (PT)
(74) Representative: Sousa da Silva Lourenço, Ludgero

(56) References cited:
- EP-A- 0 540 014
- DE-A- 4 019 532

## Description

The present invention refers to a machine for the manufacture of puff paste boxes consisting of specific devices; turning plate with baking mould holders; presser-moistener, and moulding-head, with hand or automatic command.

To make the apprehensions that come to the mind of the skilled in this field more well founded, some of the peculiarities that characterise puff paste, that is the "raw material" to be used by the machine in question, will be referred to in a merely explanatory way. Due to its specificity, the puff paste preparation consists or is made of very thin paste layers separated by even thinner layers of an adequate fat, in order to avoid that the above referred layers of paste stick one to another, the whole being constituted by multiple layers as above cited, rolled in a criterious form, and cut afterwards in little cylindrical portions that keep the rolling characteristics from the several layers already referred. It is these little paste portions that are put into each one of the moulds, in order to proceed with the moulding process.

As referred, during the preparation of puff paste must be present some care to avoid the sticking of one to another of the various paste layers but that care must be maintained throughout all the puff paste boxes manufacturing process, and thus it is also important to put the puff paste portion in correct position, that is with the little cylinder vertically laid, on the bottom centre of the mould, resting upon one of its two bases, as is the degree of moisture of the paste and its spreading or moulding, that must be done by centrifugal movement, this being, as its name shows, from the centre to the periphery, so that the layers do not compress one another, but rather reciprocally slide to keep its own independence till baking, thus allowing for the good puffing of the paste, which is a so valued factor. So, the laminate characteristic of puff paste is essential, and initially the paste was spread up and formed by hand into the moulds, with the help of fingers, namely the thumb. If in particular activities the mechanisation of actions/tasks formerly executed by human hands (encompassing both men's and women's) can be reached, and that with relevant profits to the quality of the product to be manufactured, in other activities it is not so much the same, as is the case with puff paste.

Afterwards a system of compression with a die began to be used, and the box was made as by stamping, but the strong pressure provoked distortions and/or ruptures and pile-ups of said layers, and consequently they didn't puff.

It is generally known that, aside from the lack of manpower for certain jobs, concurrence not always agrees to prejudice the returns of an activity in benefit of its quality. Because of that several efforts are being made with the objective of finding mechanical solutions, so automatic as possible, but having in mind the couple quality/profit, namely by the inventor, author of present invention, once that already in its invention whose patent application took the n°. PT 92 207 R, he did manifest a great concern on the aforesaid domain.

An apparatus for forming a piece into a box-like shape is known from EP-A-0540014. A mould containing a sheet of dough is conveyed under a pressing device which consists of a base part and a flexible cover which is inflated after insertion into the mould.

The object of this invention is to attain the possible perfection in the technological development of the sector, once that it gathers in itself novelties that would be immediately of extreme importance "per se" to solve some of the problems, needs and/or difficulties formerly specified.

The present invention consists of a machine for the manufacture of boxes made of puff paste, consisting of three main portions, as follows:
- moulding head;
- presser/moistener;
- turning plate with baking mould holder support;
all of them mounted upon a body consisting of machine head and base.

Inside the machine head, that rests upon a base, and as shown, there are all the devices for the distribution and control of compressed air used for the operation of the machine as explained below, as well as a on/off button to connect/disconnect the machine, said machine having fixed to its frontal face an arm that supports the device that commands the moulding head and the presser-moistener element, which is feed by capillary effect from a little water tank laterally fixed to the tower.

The manually or automatically turning plate, freely rotationally fixed to the machine head base, has a baking mould holder support mounted upon it. In this embodiment is only shown an example with capacity for three moulds, in which said moulds enter by fitting in laterally, thus remaining stuck in, in order to avoid their coming off upwards, dragged out by the adherence of the puff paste to the mould, when the moulding head raises itself and splits itself from the moulded paste, at the same time as in the side opposite to the admission of the mould on the baking mould holder support, and in each one of the mould compartments, there is a lateral cavity that permits to tuck a finger in to help expelling off the mould with the moulded paste from the support.

To further detailing the consisting elements of present invention we refer to the drawings accompaning this specification, which are integral part of it, and are referred only as a preferred embodiment and so cannot have any limiting character under the scope of present invention.

The figures show:

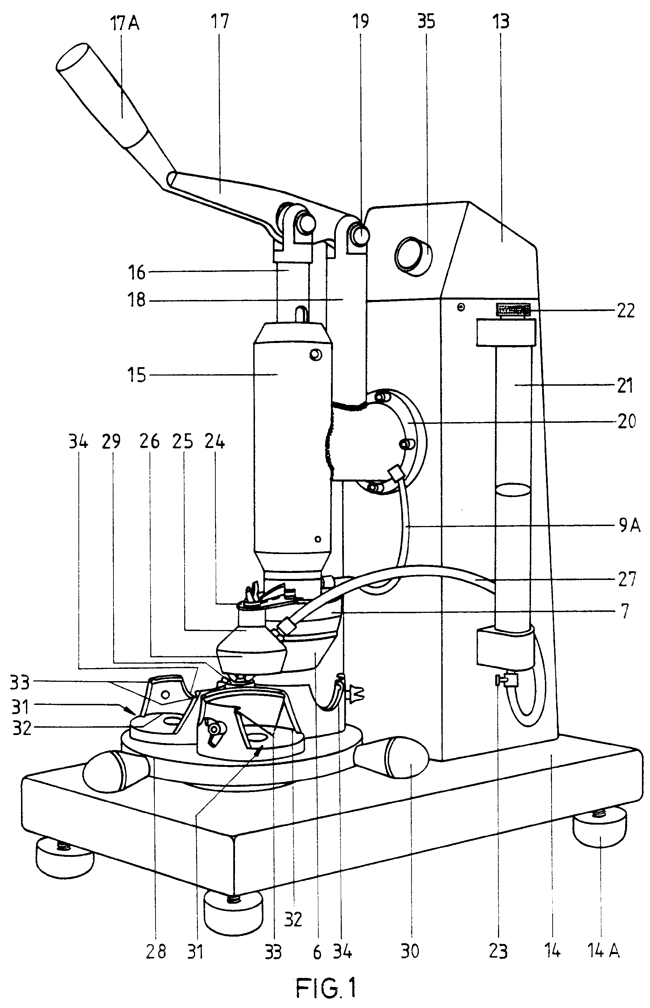

- **Fig. 1 -**: a general perspective view of the machine;

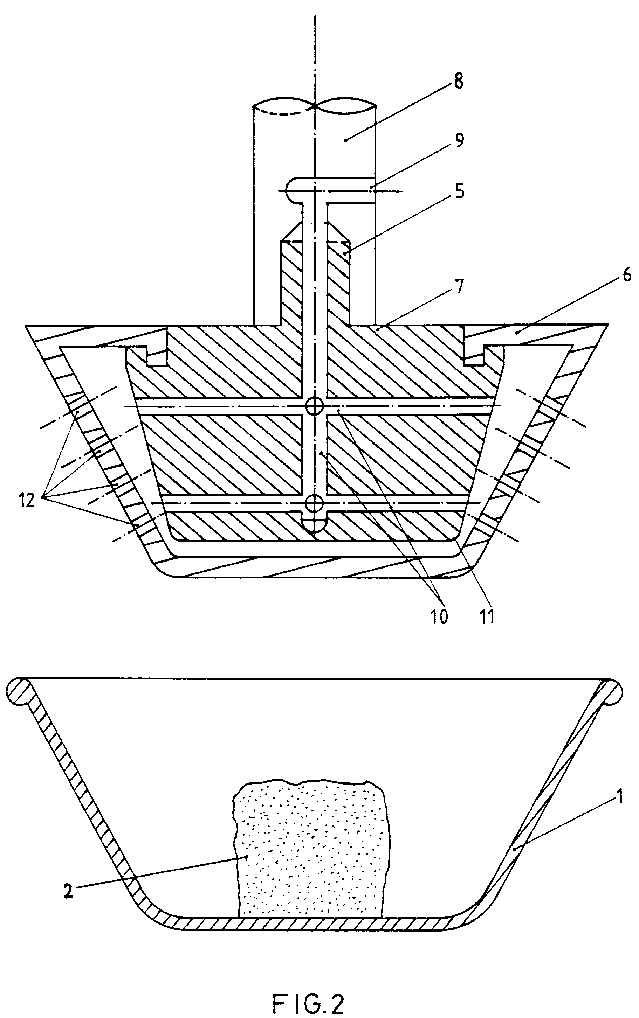

- **Fig. 2 -**: a cross section view of the moulding head and mould, with a portion of paste;
- **Fig. 3 -**: a cross section view of the moulding head and mould, in an intermediate action of moulding;
- **Fig. 4 -**: a cross section view of the moulding head and mould, in a phase of compression moulding almost completed;
- **Fig. 5 -**: a cross section view of the moulding head and mould, in the terminal phase of moulding.

The present invention that is now described in more detail for better apprehension of the novelties produced in it, consists basically of a body constituted by a machine head (13) and a base (14) on which the former stands, and that in its turn is settled over four little adjustable feet (14A) to allow for the levelling of the machine. To the head (13) is fixed a tower (15) by means of a flange (20), and inside said tower moves a piston (16) controled by a lever (17) with an handle (17A) (or automatically by hydraulic command), that has its fulcrum (19) at the top of a shaft (18) that rests perpendicularly upon the arm that connects flange (20) to tower (15).

At the lower end (8) of piston (16) is applied the moulding head (6) of a generally truncate cone shape, fixed through spindle (5), having said moulding head fixed to its nuclear rigid portion (7), a tie rod (24) that supports the presser-moistener (25) of a generally truncate cone shape, which has an adequate lower shape lined by a felt like fabric (26), and that is wet by water supplied by capillary effect through a tube (27) from container or tank (21) laterally fixed to the machine head (13). The container or tank (21), once full of water, is tightly closed by a stopper (22) that can eventually have or have not a security tap (23). The presser-moistener (25) has the function of preforming a portion of paste (2) to be moulded, and simultaneously of correctly moisturise its surface in order to make the moulding easier, and avoid the sticking of the paste to the moulding head.

During operation the water contained in the felt is partially absorbed by the portion of paste (2), and in the rest position the water lost to the paste is recovered by the felt due to capillary attraction. The perfect stability of the degree of moisture in the felt at the beginning of each operation is thus efficiently protected.

The moulding head consists of a rigid nuclear portion (7) and a whole rubber part (6) and is solidary with a spindle (5) that permits its connection to the lower end (8) of piston (16). Spindle (5) and lower end (8), have an inlet (9) that allows for the connection of compressed air from outside, via a tube (9A), to the different internal channels (10) for portion (7), whose lower edges (11) are rounded to avoid damaging the rubber part (6). The whole rubber part (6) with the shape of a countermould to the mould (1), possesses at its lateral conical periphery some micro bores (12), which will make easier the loosening of the paste (2) from said whole rubber part (6) aided by the compressed air pulsed and injected through the inlet tube (9A) to the set of internal channels (10).

The baking mould holder support (29) mounted upon the turning plate (28) on the base (14), that can, for example, be rotated by hand by means of some handles (30), and that "sticks" itself in respective peripheral projections at the correct positions to put the moulds under the presser-moistener and moulding head, said baking mould holder support having in this embodiment the capacity for three moulds, and presenting some openings (31) for the admission of the moulds (1) to some compartments (32) with a semiperipheral fitting (33) where the peripheral upper borders of the moulds (1) will fit in, to restrain them from being dragged out by the adherence of the paste to the mould during the phases of preformation and moulding. The baking mould holder support (29) has also, for each compartment (32), one or two cavities (34) that are used to push the moulds (1) with a finger when they are extracted from their compartments (32) after the moulding of the puff paste. The basic operation of the machine that is object of this specification of invention is as follows, after the switching on of a button (35), on the front upper panel of the machine head:

The process for producing or manufacturing puff paste boxes, namely for cream cakes or others that use that kind of box shape, starts with the introduction of a first mould (1), with a portion of paste (2) on it, into a compartment (32) of the baking mould holder support (29), rotating the turning plate (28) a certain degree and putting a second mould (1) with paste (2) into the immediate compartment (32) so that, as before and ever after, the bord of mould (1) enters the fitting (33) of said compartments.

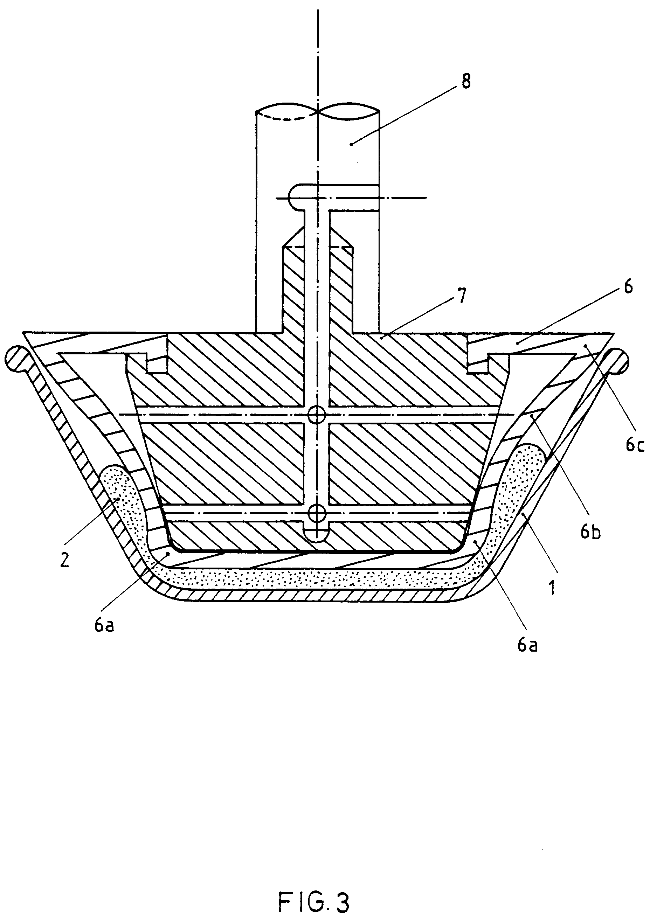

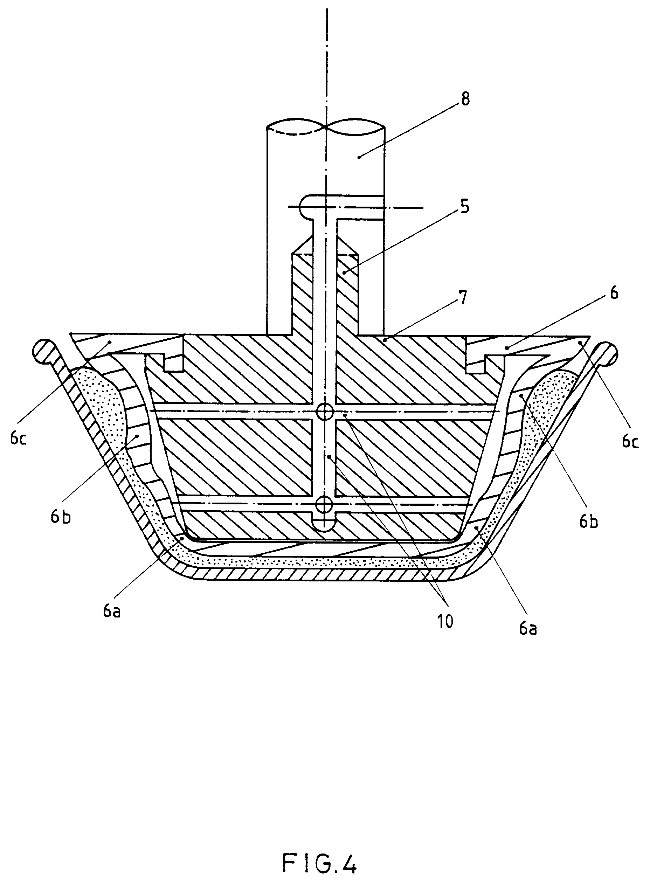

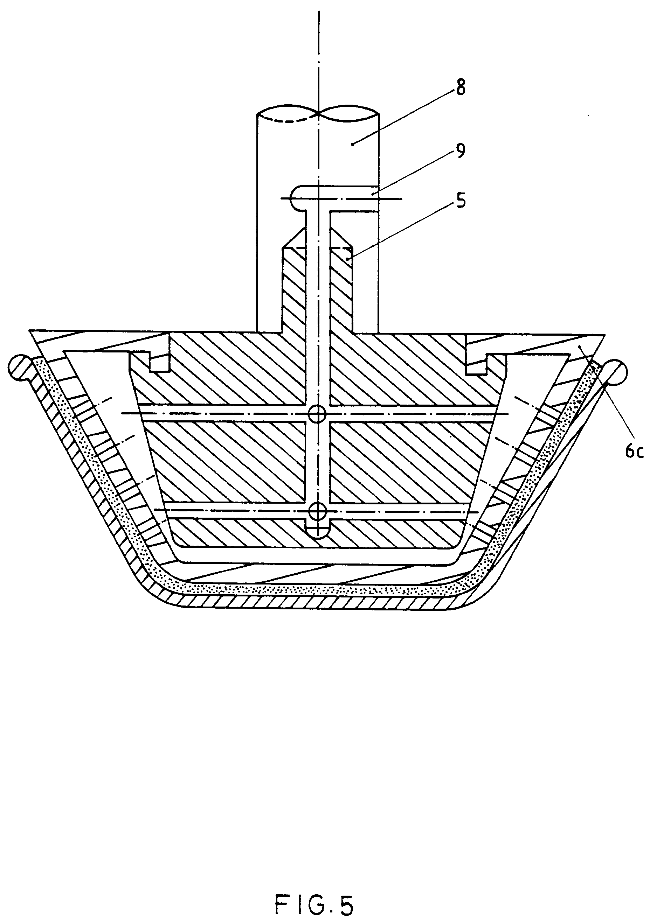

When the lever (17) is operated (in case of manual command version) so that the heads get down and the presser-moistener proceeds to the preformation of the paste portion, inside the moud inserted in first place, and after that the heads get up and there is a further degree of advance of the turning plate (28) and the introduction of one more mould (1) with paste (2) into another compartment (32). Now, in the embodiment referred in this specification, (capacity for three moulds) the baking mould holder support is full, so that when the heads are forced down the presser-moistener will preform the paste portion (2) inside the second mould that was introduced in second place, meanwhile the moulding head is simultaneously moulding a portion of paste already preformed and moisturised by the presser-moistener during the immediately anterior step. When it gets down, the moulding head compresses the paste (2) with the body or rigid part (7) so making the rubber part (6) covering it to start forcing the paste to the periphery of the mould (Fig. 3), stopping in that position, until the compressed air injected through a tube (9A) and spreading through the several channels (10) forces the rubber part (6) to pulse radially to the lateral periphery of the mould (Fig. 4), making to slide sidewards and upwards among themselves the various layers that constitute the paste (2) due to the better flexibility of the peripheral lateral zone of the whole rubber part (6), whose form adapts itself sequentially to the multiple phases throuh which passes the moulding of the paste (2), taking several shapes (6a,6b,6c) - (Figs. 3 and 4), until it reaches the final phase, (Fig. 5) when the puff paste box is completely moulded.

The referred pulse, that must be maintained till the end of the process, makes the lateral lower portion (6A) of the rubber part (6) move itself against the wall of the mould, what forces the paste in excess at this zone to move itself up (Fig. 3), thus occupying the space still existing near the conical portion of rigid part (7), where, as said, the rubber part (6), due to its flexibility allows for such an evolution from the paste (2).

In the immediately following phase, the injected compressed air continues forcing the middle lateral portion (6b) of the rubber part (6), to move against a wall of the mould (1), compressing the paste that is forced to follow an ascending way through the clearance still existing between the rubber part (6) and the mould (1), expelling out the paste (2) in excess through the clearance between the mould and the upper lateral portion (6c) of rubber part (6), less flexible. Then, with the raising of piston (16), starts the detaching of rubber part (6) from said paste (2), already moulded in the shape of a puff paste box, with the help of the air that comes out of the lateral micro bores (12), on the peripheral lateral surface of the rubber part (6), which makes the paste of the box to split from the walls of part (6). After that the machine returns to its resting position, being the mould (1) with the puff paste box already moulded, extracted from the baking mould holder support (29) by introducing a finger into a slot (34), to push the mould out of respective compartment (32), in which a fourth mould (1) will be introduced with a new portion of paste (2), thus being the cycle indefinitely repeated as needed.

This machine with all the novelties it encompasses, not only permits to make the manufacture of the puff boxes profitable from an economical point of view (time and manpower), but also secures the quality of the puff paste and its inherent correct after baking swelling.

In its essence this invention can be put to practice in other embodiments that only differ in details from the specified embodiment, referred solely as a non limitative example, and which are also inclosed in the protection that is claimed.

## Claims

1. Machine for the manufacture of puff paste boxes, constituted by a body consisting of a machine head (13) and a base (14) on which are mounted a moulding head, a presser-moistener (25) and a turning plate (28) with a baking mould holder support (29) resting thereon, the head and the presser-moistener (25) being interlinked by a coupling rod (24), and being both acted by a piston system, manually or automatically controlled, said piston system being solidary with the machine head (13) by means of an arm with a flange (20), the machine head (13) having inside it some devices for the control of compressed air, that are to be used for the intrinsical action of the moulding head, the piston (16) having a lower end (8) where is applied a spindle (5) of the moulding head, the moulding head consisting of a rigid part (7), of which the spindle (5) is part, and a whole rubber part (6).

2. Machine for the manufacture of puff paste boxes as in Claim 1, characterised in that the moulding head is of a generally truncate cone shape, and that the whole rubber part (6) is flexible and has the shape of a countermould to mould (1).

3. Machine for the manufacture of puff paste boxes as in Claim 2, characterised because both the spindle (5) and the end (8) of piston (16), have a coincidental bore (9) wherefrom enters the pulsed compressed air from the interior of the machine head (13) through a tube (9A) to spread itself along the internal channels (10) existing inside part (7).

4. Machine for the manufacture of puff paste boxes, as in Claim 2, characterised in that the rigid part (7) possesses an internal network of channels wherethrough the compressed air circulates, that with the rubber part (6) will mould the paste (2) inside mould (1) and because it presents a rounded lower edge, to avoid damaging the rubber.

5. Machine for the manufacture of puff paste boxes, as in Claim 2, characterised in that the whole rubber part (6) possesses in its conical peripheral zone, a series of micro bores (12), wherethrough compressed air flows to make easier the removing of the paste (2) from the already moulded puff paste, out of the walls of the rubber part (6) of the moulding head.

6. Machine for the manufacture of puff paste boxes, as in Claim 2, characterised in that the whole rubber part (6) has a greater flexibility upon its conical lateral zone (6a,6b,6c) to better propel the paste (2) to the external-upper periphery and whose shape adapts itself sequentially to the multiple through which the moulding of the paste passes (2), taking various shapes (6a,6b,6c) until reaching the final stage in which the puff paste box is completely moulded.

7. Machine for the manufacture of puff paste boxes, as in Claim 1, characterised in that the presser-moistener (25), of a generally truncate cone shape, has a lower end (26) lined with felt type fabric that moisturises the portion of paste (2) inside the mould (1) when it presses this paste, recovering the water lost to the paste (2) when in the resting position, by capillary attraction through a tube (27) that connects it with a tank (21) tightly closed by the access stopper (22), and fixed to the lateral side of the machine head (13).

8. Machine for the manufacture of puff paste boxes, as in Claim 1, characterised in that the baking mould holder support (29) that stands itself on the turning plate (28), consists (in present embodiment) of compartments (32) with admission openings (31) for the moulds (1).

9. Machine for the manufacture of puff paste boxes, as in Claim 8, characterised in that the baking mould holder support (29), presents some semiperipheral fittings (33) in the compartments (32) permitting to fit in them the peripheral upper border of the mould (1) so that this one stays fixed and is not dragged out by the eventual adherence of the paste to the heads (2).

10. Machine for the manufacture of puff paste boxes, as in Claim 8, characterised in that the baking mould holder support (29) has one or two cavities (34) at the external upper periphery of each one of the compartments (32) to help, by the insertion of a finger, the expelling of a mould, with a puff paste box already moulded and thus ready to go to the baking phase.

## Patentansprüche

1. Maschine für dem Herstellung von Blätterteig Ksten, umfassend ein Körper dass einen Maschinekopf (13) und eine Maschinenbasis (14) wohin eine Abformungskopf, einen Feuchterdruckerpresse (25) und eine Drehplatte (23) hergestellt sind mit ein Halter für Abkocungsatzbehälter (29) erüber gesetzt, die Maschinenkopf und das Feuchterdruckerpresse (25) durch ein Verbindungsstange (24) im Verbindung seind und, sie sind beide handfertig oder automatische kontroliert durch ein Kolbenssystem, solche Kolbensystem ist solidärisch mit die Maschinekopf (13) durch ein Arm mit einen Flange (20), die Maschinenkopf (13) habt im seine Innenseite irgend Vorrichtungen für das Pressluft Kontrol, welcher werden benutzt sein für das wesentlich Aktion der Abformungskopf, der Kolben (16) habt eine unternende (8) wo einen Axel (5) von den Abformungskopf gesetzt ist, und das Abformungaskopf aus einen Hartteil (7) von der das Axle (5) einen Teil ist und aus einen ganz Gummiteil (6) gemacht ist.

2. Maschine für dem Herstellung von Blätterteig Kasten, nach Anspruch 1, dadurch gekennzeichnet, dass die Abformunskopf einen generalische Kegelstumpf Form habt, und dass ganz Gummiteil (6), biegbar ist und eine Form von Gegensatzbehälter zu dem Satzbehälter habt.

3. Maschine für dem Herstellung von Blätterteig Kasten, nach Anspruch 2, dadurch gekennzeichnet, dass beider der Axle (5) und das Ende (8) vom Kolben (16), einen übereinstimmend Bore (9) haben, wodurch das antrieben Pressluft von innen der Maschinekopf (13) eingetretten ist, durch eines Rohres (9A) zu selbst aufspritzen sein durch innen Kanale (10) im innenseite des Teiles (7).

4. Maschine für dem Herstellung von Blätterteig Kasten, nach Anspruch 2, dadurch gekennzeichnet, dass die Hartteil (7) habt, einen inner Kanalenetz wodurch das Pressluft umlauf das die Gummiteil (6), der Teig (2) werde innen des Satzbehälter (1) abgeformen, und deswegen letztere habt einen runden Unterkante zu dem Gummi beschädigung vermeiden.

5. Maschine für dem Herstellung von Blätterteig Kasten, nach Anspruch 2, dadurch gekennzeichnet, dass die ganz Gummiteil (6) habt in seine Kegelkronenkreis eine Reihe von Mikrobohren (12), wodurch das Pressluft stromt zu leichter machen die Entfernung der Teig (2) con der stetz abgeformen Blätterteig, aus dem Wande der Gummiteil (6) von die Abformungkopf.

6. Maschine für dem Herstellung von Blätterteig Kasten, nach Anspruch 2, dadurch gekennzeichnet, dass die ganz Gummiteil (6) eine grosserer Biegsamkeit über ihrer Kegelformige seitlich Zone (6a, 6b, 6c) habt am besser antriben der Teig (2) zu die ober aussen Kronenkreis und mit ein Form dass sequenzweise umstellt sich zu dem vielzhal Stufen wodurch das Teig (2) durchtritts, vielfach Formen genommen (6a, 6b, 6c) bis das Endstufe zu erreichen, wann das Blätterteig Kasten voll fertig ist.

7. Maschine für dem Herstellung von Blätterteig Kasten, nach Anspruch 1, dadurch gekennzeichnet, dass die Feuchterdruckerpresse (25) generalische kegelstumpformige, einer unter ende (26) mit einen Felt type Stoff gekleidet habt der anbefeuchtes das Teigportion (2) innen dem Satzbehater (1) wann es gesagt Teig angedruckt das Wasser wiederbekommen verlost von Teig (2) wann im Ruhestelung, gemäss Kapillare Anziehungskraft durch ein Rohre (27) das verbindes ihn mit ein Tank (21) luftdicht geschlossen mit ein Eingangstopfen (22), und am seitliche Seite des Maschinenkopf (13).

8. Maschine für dem Herstellung von Blätterteig Kasten, nach Anspruch 1, dadurch gekennzeichnet, dass dem Halter des Abkochungsatzbehälter (29) dass selbstsetzen am die Drehplatte (28) ist (im dieses Ausführungsform) auf vielfach Räume (32) mit eingang Öffnungs (31) für die Satzbehaltern (1) gemacht.

9. Maschine für dem Herstellung von Blätterteig Kasten, nach Anspruch 8, dadurch gekennzeichnet, dass in dem Halter des Abkochungsatzbehälter (29) stellts vielfach Halbperiferische Vorrichtungen (33) in dem Räume (32) vor, dass der Inneineinfugen des periferisches Überrandes der Satzbehälter (1) so dieses stand fest und nicht wegschleppt ist von der eventuell Teig Haftfestigkeit auf die Kopfe (2).

10. Maschine für dem Herstellung von Blätterteig Kasten, nach Anspruch 8, dadurch gekennzeichnet, dass in dem Halter des Abkochungsatzbehälter (29) ein oder zwei Vertiefungen (34) am ausser Überkronerkreis von jeder ein des Räumes (32) zu helfen, durch die Einfügung eines Fingers, die Entfernung von ein Satzbehälter, mit eine schon Blätterteig Kasten und also bereitwillig zu im Abkochung Stufe gehen.

## Revendications

1. Machine pour la manufacture de boites en pâte feuiletée, constituée par un corps que consiste dune tête de machine (13) et d'une base (14) sur laquele sont montés une tête-modeleuse, un présseur-humidificateur (25) et une plaque tournante (28) avec un support pour le moule de cuisson (29) que s'y appuie, la tête et le presseur-humidificateur (25) étant enterliés par une barre de liaison (24) et étant tous les deux actionés par un système de piston, manuel or automatiquement controlé, le dit système de piston étant solidaire avec la tête de la machine (13) atravers d'un bras avec une flange (20), la tête de la machine (13) ayant à son intérieur quelques dispositives por le contrôle de l'air comprimé, lesquels se destinent à être utilisés pour láction intrinsèque de la têtê-modeleuse, le piston (16) ayant une extremité inférieure (8) oú s'applique un éssieu (5) de la tête-mouleuse, la tête-modeleuse étant constituée par une part rigíde (7) à laquelle appartient l'éssieu (5) et pou une part de caoutchouc (6).

2. Machine pour la manufacture de boites de pâte feuilletée selon la Revendication 1, characterizée parce que la tête-modeleuse à une forme génèrale tronconique, et la part de caouchtchouc (6) est flexible et présente la forme d'un contre-moule de la moule (1).

3. Machine pour la manufacture de boites de pâte feuilletée selon la Revendication 2, characterizée parce que, soit l'éssieu (5) soit l'extremitée (8) du piston (16), ont touts les deux un trou coicident (9) atravers lequel entrent les impulsions de l'air comprimé venu de l'intérieu de la tête de machine (13) par un tube (9A) pour s'épanouir tout au long de canaux (10) qui se trouvent dans la part intérieure.

4. Machine pour la manufacture de boites de pâte feuilletée selon la Revendication 2, characterizée parce que la part rígide (7) possède un réseau interne de canaux atravers lequel circule l'air comprimé qui, avec la part de caoutchouc (6) ira modeler la pâte (2) a l'intérieur du moule (1) et parce qu'elle pésente una arête inférieure arrondi pour éviter des dommages sur le caoutchouc.

5. Machine pour la manufacture de boites de pâte feuilletée selon la Revendication 2, characterizée parce que la part de caoutchouc (6) possède dans sa zone conique périferique, une série de micro-pérforations (12), atravers lesquelles s'écoulle l'air comprimé pour faciliter la rémotion de la pâte (2), de la pâte feuilletée déja modelée, des parois de la part de caoutchouc (6) de la tête -modeleuse.

6. Machine pour la manufacture de boites de pâte feuilletée selon la Revendication 2, characterizée parce que la parte de caoutchouc (6) a une flexibilité supérieure sur as zone conique laterale (6a, 6b, 6c) pour mieux pousser la pâte (2) vers la périphérie externe supérieure et dont la forme s'adapte séquentielement aux multiples phases atravers lesquelles passe la pâte (2) à modeler, tout en prenant diverses formes (6a, 6b, 6c) jusqu'à atteindre la phase finale oú la boite de pâte feuilletée est complement modelée.

7. Machine pour la manufacture de boites de pâte feuielleté selon la Revendication 1, characterizée parce que le présseur-humidificateur (15) avec une forme générale tronconique a une extremitée inférieure (26) révetue dans tissu du type feutre lequel humidifie la portion de pâte (2) dans l'intérieur du moule (1) quand il presses la pâte, tout en recupérant l'eau pérdue pour la pâte (2) pendant la position de repos, par atraction capillaire atravers un tube (27) lequel connecte avec un tanque (21) hermetiquemente clos par un boujon d'acess (22) et fixé a la part latérale de la tête de machine (13).

8. Machine pour la manufacture de boites de pâte feuilletée, selon la Revendication 1, characterizée parce que le support du souteneur de moules de cuisson (29) lequel se pose sur la plaque torurnante (28), est constitué (dans la présente forme de réalization) par des compartements (32) avec des ouvertures d'admision (31) pour les moules (1).

9. Machine pour la manufacture de boites de pâte feuilletée, selon la Revendication 8, characterizée parce que le supporte du souteneur de moules de cuisson (29), présente dispositifs semi-péripheriques (33) dans les compartements (32) lesquels permetent en emboiter le bord péripherique supériur du moule (1) de façon que ce dernier se mantient fixé et n'est pas entrainé par une éventuelle adhèrence de la pâte aux têtes (2).

10. Machine pour la manufacture de boites de pâte feuilletée selon la Revendication 8, characterizée parce que le support du souteneur de moules de cuisson (29) posséde une ou deux cavitées (34) sur la péripherie externe supérieure de chaqu'un des compartements (32), pour aider, par entremise de l'insertion d'un doigt, l'expulsion d'un moule, avec une boite de pâte feuilletée dejá modelée et ainsi prête à passer à la phase de cuisson.
